(19) Europäisches Patentamt
European Patent Office
Office européen des brevets

(11) EP 3 913 599 A1

(12) # EUROPEAN PATENT APPLICATION
published in accordance with Art. 153(4) EPC

(43) Date of publication:
**24.11.2021 Bulletin 2021/47**

(21) Application number: **19922154.0**

(22) Date of filing: **27.03.2019**

(51) Int Cl.:
***G08G 1/16*** *(2006.01)* ***G06T 1/00*** *(2006.01)*
***G08G 1/09*** *(2006.01)*

(86) International application number:
**PCT/JP2019/013133**

(87) International publication number:
**WO 2020/194570 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hitachi Kokusai Electric Inc.**
**Tokyo 105-8039 (JP)**

(72) Inventor: **TOGASHI Junichi**
**Kodaira-shi, Tokyo 187-8511 (JP)**

(74) Representative: **J A Kemp LLP**
**80 Turnmill Street**
**London EC1M 5QU (GB)**

(54) **SIGN POSITION IDENTIFICATION SYSTEM AND PROGRAM**

(57) In an image processing device 300: a sign detection unit 303 detects a sign from an image; a sign distance calculating unit 307 calculates a distance $D_1$ between a vehicle and the sign in the optical axis direction of an image pick-up device 100 and a distance $D_2$ between the vehicle and the sign in the direction that crosses at right angles with the optical axis direction, based on the angle of coverage of the image pick-up device 100, the resolution of the image, the position and the size of the sign within the image, and the actual size of the sign; and a sign position estimating unit 309 estimates the position in which the sign is installed, based on the direction in which the vehicle progresses and the position of the vehicle at the time when the image is taken, and the distances $D_1$ and $D_2$.

FIG.3

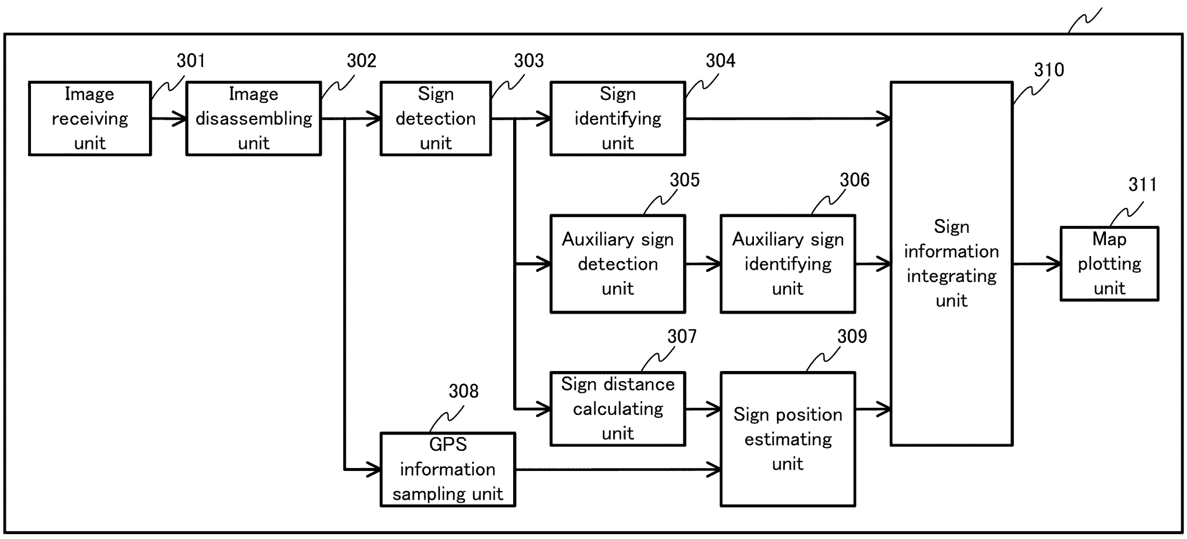




Printed by Jouve, 75001 PARIS (FR)

## Description

TECHNICAL FIELD

The present invention relates to a sign position identification system for identifying the position of a sign on the basis of an image that has been taken by an image pick-up device.

BACKGROUND ART

In recent years, major automobile makers in the world including Japan have been active in terms of the announcements and sales of vehicles that are equipped with an automated driving system. In order to put the automated driving system into practice, the management and maintenance of the road environment and the road infrastructure are important. In particular, road signs are important information at the time of automated driving, and therefore, respective local governments have become active in proceeding with storing the types and positions of the signs in a database and maintaining the infrastructure.

The main method for collecting information in order to store the data on road signs in a database as described above is the confirmation by a person at each site of the actual sign. However, such a method is inefficient due to the recent labor shortage, and at the same time, a large amount of time is required for such collection of information, and thus, the cost tends to be high.

Various types of inventions have been conventionally proposed concerning the storage of road signs in a database. For example, Patent Literature 1 discloses an invention where the functions of recognizing signs and measuring and calculating the positions thereof can be started from a menu of a dialogue-type recognition compilation system in the configuration where a recognition process is carried out before the compilation so that the evaluation of the candidate of a sign is displayed with an icon on a map in such a manner that the level of the evaluation is proportional to the size of the icon. In addition, Patent Literature 2 discloses an invention where an image processing device stores a plurality of different identifiers for identifying map information to which object information for indicating an object and the position thereof is added and the object within an image, detects the object within the object image, selects any of the identifiers on the basis of the position in which the object image was taken and the object information that has been added to the map information, and recognizes the object that has been detected by using the selected identifier.

PRIOR ART LITERATURE

PATENT LITERATURE

Patent Literature 1: JP2008-287379A
Patent Literature 2: JP2018-97738A

SUMMARY OF THE INVENTION

PROBLEMS TO BE SOLVED

In the conventional way of collecting sign information by a person, for example, the type of sign can be distinguished through visual confirmation; however, it is necessary for the position information on a sign in terms of the position of a sign (latitude and longitude) to be acquired by actively using a GPS (Global Positioning System) device in a state where the person is at the location in which the sign is installed. Even in the case where an information inputting tool is prepared, the types of signs and the contents of auxiliary signs cannot be helped but be inputted through manual work to a certain degree. In this manner, there is a limit in making efficient the work of a person who collects sign information, and thus, a great improvement cannot be expected.

The present invention is provided in view of the above-described conventional situation, and an object thereof is to provide a sign position identification system with which it is possible to automatically identify the position in which a sign is installed in order to collect sign information.

SOLUTION TO PROBLEMS

In order to achieve the above-described object, the present invention provides a sign position identification system that is constructed as follows.

That is to say, the sign position identification system according to the invention is provided with: an image pick-up device equipped in a moving body; a positioning device that measures the position of the moving body; and an image processing device that processes an image that has been taken by the image pick-up device, and characterized in that the image processing device is provided with: a sign detection unit that detects a sign from the image; a distance calculating unit that calculates, in the case where a sign is detected from the image by the sign detection unit, a first distance between the moving body and the sign in the direction of the optical axis of the image pick-up device and a second distance between the moving body and the sign in the direction that crosses at right angles with the direction of the optical axis of the image pick-up device on the basis of the angle of coverage of the image pick-up device, the resolution of the image, the position and the size of the sign within the image, and the actual size of the sign; and a sign position estimating unit that estimates the position in which the sign is installed on the basis of the direction in which the moving body moves and the position of the moving body at the time when the image is taken, and the first and second distances that have been calculated by the distance calculation unit.

Such a configuration makes it possible to estimate on the basis of an image that has been taken while the moving body is running the actual position in which the sign that is shown in the image is installed. Accordingly, it becomes possible to automatically identifying the position in which a sign is installed in order to collect sign information simply by allowing the moving body to run around a target area for collecting sign information therefrom and processing an image that has been taken while the moving body is running.

Here, the position in which the sign is installed may be estimated on the basis of the amount of shift of the direction of the optical axis of the image pick-up device relative to the direction in which the moving body moves.

The configuration may allow the lateral width or the longitudinal width of the sign to be used as the size of the sign within the image and the actual size of the sign. The configuration in this case may allow, in the case where the lateral width of the sign within the image is longer than the longitudinal width, the lateral width of the sign to be used as the size of the sign within the image and the actual size of the sign, and in the case where the longitudinal width of the sign within the image is longer than the lateral width, the longitudinal width of the sign to be used as the size of the sign within the image and the actual size of the sign.

In addition, the sign may be one from among the ones with a plurality of dimensions, and therefore, the dimensions of the sign may be specified. Concretely, the configuration may allow the dimensions of the sign to be specified in accordance with the type of road. Alternatively, the configuration may allow the dimensions of the sign to be specified in accordance with the positional relationship between the road and the sign. Alternatively, the configuration may allow the dimensions of the sign to be specified in accordance with the amount of change in the size of the sign within the image as the vehicle runs.

Furthermore, the configuration may allow the image processing device to be further provided with a sign position integrating unit that integrates the positions in which the sign is installed that have been estimated by the sign position estimating unit for each of a plurality of images that show the same sign, into one position.

## ADVANTAGEOUS EFFECTS OF THE INVENTION

The present invention can provide a sign position identification system with which it is possible to automatically identify the position in which a sign is installed in order to collect sign information.

## BRIEF DESCRIPTION OF DRAWINGS

FIG. 1 is a diagram schematically showing an example of the configuration of the sign registration system according to one embodiment of the present invention;

FIG. 2 is a diagram showing an example of the configurations of the image pick-up device and the GPS receiver in the sign registration system in FIG. 1;

FIG. 3 is a diagram showing an example of the configuration of the image processing device in the sign registration system in FIG. 1;

FIG. 4 is an example of a flow chart for the sign registration process by the sign registration system in FIG. 1;

FIG. 5 is a diagram showing an example of the display showing the results of detection of a sign;

FIG. 6 is a table for illustrating the shapes, colors and dimensions of signs;

FIG. 7 is a diagram showing an example of plotting sign information on a map;

FIG. 8 is a diagram illustrating the method for calculating the distance between a vehicle and a sign and estimating the position in which the sign is installed;

FIG. 9 is a diagram illustrating the positional relationship between a vehicle and a sign; and

FIG. 10 is a diagram showing an example of a case where the direction in which a vehicle progresses and the direction of the optical axis of an image pick-up device are shifted from each other.

## DESCRIPTION OF EMBODIMENTS

One embodiment of the present invention is described in reference to the drawings.

FIG. 1 is a diagram schematically illustrating the configuration of the sign registration system in accordance with one embodiment of the sign position identification system according to the present invention. The sign registration system in the present example is provided with an image pick-up device 100, a GPS receiver 200, an image processing device 300, a recording device 400 and an operation terminal 500. In the present example, all of these are equipped in a vehicle; however, they are not necessarily mounted in a vehicle except the image pick-up device 100 and the GPS receiver 200. The image pick-up device 100 corresponds to the image pick-up device according to the present invention, the GPS receiver 200 corresponds to the position measuring device according to the present invention, and the image processing device 300 corresponds to the image processing device according to the present invention.

The image pick-up device 100 is a device for taking an image of a sign that is installed along a road and is equipped in a vehicle. The image pick-up device 100 may be of a car interior installation-type such as a drive recorder, or may be of a car exterior installation-type represented by an MMS (Mobile Mapping System). As for the image pick-up device 100, those having a wide horizontal angle of coverage are suitable, those having a high resolution are suitable, and those having a high frame rate are suitable. In the present example, a front camera for taking images in the direction toward the front of the vehicle is equipped in the vehicle; however, a camera for taking images in other directions may be added.

The GPS receiver 200 is a device for measuring the position (latitude and longitude) on the basis of a radio wave from a GPS satellite and is equipped in a vehicle. The GPS receiver 200 may be integrated in the image pick-up device 100 or may be formed as a different device from the image pick-up device 100. In addition, a measuring device for measuring the position in other systems may be used in place of the GPS receiver 200.

The image processing device 300 is a device for processing image data taken by the image pick-up device 100. The image processing device 300 may process the image data that is gained from the image pick-up device 100 in real-time or may process the image data that has been taken in advance and recorded in the recording device 400. The image processing device 300 analyzes pieces of the inputted image data sequentially and outputs the results of the detection of a sign. The results of the detection are written out as a log in such a format as CSV (Comma Separated Values), and at the same time are overlapped on the image data. The information on the results of detection includes the coordinates of the position in which the sign is detected on an image, the size (longitudinal width and lateral width) of the sign on an image, the type of sign, the reliability of the detection of the sign, the distance between the vehicle (the image pick-up device 100 to be precise) and the sign, the time and date when the image is taken, the position (latitude and longitude) of the vehicle when the image is taken, and the like. In addition, the image processing device 300 generates sign information by integrating a plurality of results of detection as described below, and also carries out a process for plotting the corresponding position on a map.

The recording device 400 is a device for storing various types of data that includes images taken by the image pick-up device 100 and the results of processing by the image processing device 300. The recording device 400 provides the corresponding data in response to a request from an external device that includes the image processing device 300 and the operation terminal 500.

The operation terminal 500 is a terminal that is operated by the operator who uses the present system. The operation terminal 500 may be an installation-type device or a portable device such as a smartphone or a tablet terminal, and thus, various types of devices can be used as the terminal. The operation terminal 500 can display various types of information that includes images taken by the image pick-up device 100 and the results of processing by the image processing device 300. In addition, the operation terminal 500 can accept various types of instructions from a user through an input apparatus such as a touch panel, a keyboard or a mouse.

FIG. 2 shows an example of the configurations of the image pick-up device 100 and the GPS receiver 200.

The image pick-up device 100 is provided with an image pick-up unit 101, an image quality adjusting unit 102, a image frame position information synthesizing unit 103 and an image output unit 104. The GPS receiver 200 is provided with a GPS receiving unit 201 and a GPS information generating unit 202.

In the GPS receiver 200, the GPS receiving unit 201 receives a radio wave that has been transmitted from a GPS satellite. The GPS information generating unit 202 measures the position of the vehicle (the position of the antenna of the GPS receiver 200 to be precise) on the basis of the radio wave received by the GPS receiving unit 201, and generates and outputs GPS information that indicates the position as a result of the measurement.

In the image pick-up device 100, the image pick-up unit 101 takes an image in the direction toward the front of the vehicle while the vehicle is running. The image quality adjusting unit 102 adjusts the image quality of the image data that has been gained by the image pick-up unit 101. The image frame position information synthesizing unit 103 carries out a process for adding the GPS information that has been inputted from the GPS receiver 200 to the image within each frame on the image data of which the quality has been adjusted by the image quality adjusting unit 102, and outputs the results to the image output unit 104. It is preferable for the GPS information to be updated for each frame; however, it may be updated for a certain number of frames (for every five frames, for example). The image output unit 104 outputs the image data to which GPS information has been added. As for the image data, various types such as mp3, avi and H.264 can be used.

FIG. 3 shows an example of the configuration of the image processing device 300.

The image processing device 300 is provided with an image receiving unit 301, an image disassembling unit 302, a sign detection unit 303, a sign identifying unit 304, an auxiliary sign detection unit 305, an auxiliary sign identifying unit 306, a sign distance calculating unit 307, a GPS information sampling unit 308, a sign position estimating unit 309, a sign information integrating unit 310 and a map plotting unit 311.

In the image processing device 300, the image receiving unit 301 receives image data that is outputted from the image pick-up device 100. The image disassembling unit 302 disassembles the image data that has been received by the image receiving unit 301 into images within the respective frames (JPEG images, for example), and outputs the images to the sign detection unit 303 and the GPS information sampling unit 308. The sign detection unit 303 carries out a process for detecting a sign on the images that have been inputted from the image disassembling unit 302. The sign identifying unit 304 identifies the type of sign that has been detected by the sign detection unit 303. The auxiliary sign detection unit 305 carries out a process for detecting an auxiliary sign that accompanies the sign that has been detected by the sign detection unit 303. The auxiliary sign identifying unit 306 identifies the type of auxiliary sign that has been detected by the auxiliary sign detection unit 305.

The sign detection unit 303, the sign identifying unit 304, the auxiliary sign detection unit 305 and the auxiliary sign identifying unit 306 may be implemented by means of AI (Artificial Intelligence) where a model that has learned in advance is actively used. For example, an inference model may be generated through deep learning by using an image recognition process that is represented by a CNN (Convolutional Neural Network) so as to be used for the detection and/or identification of a sign and/or an auxiliary sign. Here, only the contents of the stylized portion may be learned regarding auxiliary signs.

The sign distance calculating unit 307 calculates the distance between the vehicle and the sign that has been detected by the sign detection unit 303. The GPS information sampling unit 308 samples out the GPS information from the image that has been inputted from the image disassembling unit 302. The sign position estimating unit 309 uses the distance that has been calculated by the sign distance calculating unit 307 and the GPS information (position of the vehicle) that has been gained from the GPS information sampling unit 308 in order to estimate the position in which the sign that has been detected by the sign detection unit 303 is installed.

Here, images within a plurality of frames are gained before the vehicle that has approached the sign passes by the sign, and therefore, a plurality of results of detection are gained concerning one sign. Thus, the sign information integrating unit 310 tracks the sign concerning the images within the plurality of frames on the basis of the type of sign and the distance vis-à-vis the sign. Then, a plurality of results of detection gained by the above-described respective processing units 303 through 309 concerning the same sign are integrated so as to generate sign information. The sign information includes the type of sign (and the type of auxiliary sign) and the position information on one point that is most likely as the position in which the sign is installed. The map plotting unit 311 plots on a map the sign information that has been generated in the sign information integrating unit 310.

The procedure of the sign registration process in the sign identification system in the present example is described in reference to the flow chart shown in FIG. 4.

First, the image pick-up device 100 and the GPS receiver 200 are correctly installed in a vehicle. In addition, it is confirmed in advance that the image of the image pick-up device 100 is contained within a correct angle of coverage. The image pick-up device 100 may be started up interlocking with the start-up of the engine of the vehicle or may be manually started up. Furthermore, the operation of the GPS receiver 200 is confirmed (steps S100 and S102), and the vehicle is started running in the case where the radio wave can be correctly received from the GPS satellite (step S104).

While the vehicle is running, the image pick-up device 100 takes an image in the direction toward the front of the vehicle. At this time, the GPS receiver 200 that interlocks with the image pick-up device 100 operates in sync with the shuttering of the image pick-up device 100 so as to generate GPS information, which is then outputted to the image pick-up device 100. The image pick-up device 100 adds the GPS information to the image that has been taken, and then outputs the resulting image to the recording device 400 that records the resulting image (step S106).

The image data that is outputted from the image pick-up device 100 is inputted into the image processing device 300 as well, and the following process is carried out in the image processing device 300 in real-time. Here, after the vehicle has finished running, the image processing device 300 may read out the image data from the recording device 400 so as to carry out the following process.

First, in the image disassembling unit 302, the image data that has been received by the image receiving unit 301 is disassembled into images within respective frames.

Next, in the sign detection unit 303, a process for detecting a sign is carried out on the image within each frame that has been disassembled from the image data by the image disassembling unit 302 (step S108). In the process for detecting the sign, an image area having the possibility of showing the sign is detected from an image, and at the same time, the reliability of the results of detection is calculated, and thus, whether or not the reliability is no less than a predetermined threshold value is determined (step S110). In the case where the reliability is no less than the threshold value, it is determined that what is shown in the image area is the sign. This is the manner of reducing as much as possible the number of errors in the detection of the sign. FIG. 5 shows an example of the display of the results of the detection of a sign. In this figure, a character string "No parking" that indicates that a no parking sign has been detected and a numerical value "78%" that indicates the reliability of the results of detection are displayed in such a manner as to overlap the image in the vicinity of the area that has been determined to show the sign.

When the sign detection unit 303 detects a sign from an image, a process for identifying the type of sign is carried out in the sign identifying unit 304 (step S112). As shown in FIG. 6, the shape, the color, the pattern (design) and the like of the sign differ depending on the type of sign, and therefore, the type of sign can be identified by analyzing the shape, the color, the pattern and the like of the sign that has been detected from the image.

Furthermore, a process for detecting an auxiliary sign that accompanies the sign is carried out in the auxiliary sign detection unit 305 (step S114). The process for detecting an auxiliary sign is carried out by focusing on an image area in an upper portion or in a lower portion of the sign. Auxiliary signs are always installed together with a sign, and therefore, the process for detecting an auxiliary sign is carried out by narrowing the area after the detection of a sign in order to increase the precision of detection of an auxiliary sign.

When an auxiliary sign is detected by the auxiliary sign detection unit 305, a process for identifying the auxiliary sign is also carried out in the auxiliary sign identifying unit 306. Auxiliary signs are formed of a pattern (design) and a stylized character string or a certain character string. The pattern and stylized character string can be identified by means of AI where a model that has learned in advance is actively used. As for the certain character string, an OCR (Optical Character Reader) process may be carried out on the area of the auxiliary sign so as to identify the contents of the character string.

Next, in the sign distance calculating unit 307, the distance between the vehicle and the sign that has been detected by the sign detection unit 303 is calculated (step S116). In addition, in the sign position estimating unit 309, the position in which the sign is installed is estimated (step S118). The calculation of the distance vis-à-vis the sign and the estimation of the position in which the sign is installed are described below in detail.

Next, in the sign information integrating unit 310, a plurality of positions in which the same sign is installed are integrated, and the position of one point that is most likely as the position in which the sign is installed is specified, sign information that includes the type of sign (and the type of auxiliary sign) and the position information that is integrated to one point is generated (step S120).

The process for integrating a plurality of positions in which the sign is installed can be carried out by means of a technique for simply averaging the plurality of positions in which the sign is installed, for example. Alternatively, various types of techniques are available such as a technique for averaging the distances that are weighed in accordance with the distance (multiplied by a value whereby the shorter the distance is, the greater the value is), a technique for averaging the distances that are weighed in accordance with the reliability of the detection of the sign (multiplied by a value whereby the higher the reliability is, the greater the value is), a technique for averaging the distances that have been selected in the order of shortness or in the order of the height of reliability, and a combination of any of these techniques.

When a plurality of positions in which a sign is installed are integrated, the positions that are clearly abnormal may be excluded on the basis of the map information. As for the positions that are clearly abnormal as a position in which the sign is installed, a case where the position is on a building, a case where the position is on a road (excluding the sign of which the size is enlarged on the map), and the like can be cited as examples.

In the case where the vehicle is stably running at a constant speed, GPS information that includes the longitude, the latitude, the direction and the like can be mapped so as to express the route along which the vehicle is running in such a manner as to draw the track. As the speed of the vehicle decreases as in the case of turning, however, the position from the GPS information and the actual position of the vehicle tend to be different from each other. Furthermore, images are being taken at a constant frame rate while the vehicle is reducing speed. In the case where the image pick-up device is capturing a certain sign, for example, the position of the sign on the screen does not move much, while the time during which the sign is shown on the screen becomes long. Then, an error in the estimation of the position of a sign such that the sign is suddenly located in the direction opposite the direction in which the vehicle has run so far, or an error in the estimation due to the shift of the direction indicated by the GPS easily occurs. In particular, in the case where the intervals for updating the GPS information are long, an error in the estimation more easily occurs in the case where the direction of the vehicle changes.

Thus, particularly in the case where it is detected that the speed of the vehicle has decreased, the sign information integrating unit 310 assumes that the vehicle is turning or stopping, and inspects the reliability of the GPS information by actively using the image frames of the image data that has been accumulated to a certain degree and the GPS information without calculating the position with frame units. That is to say, the sign information integrating unit 310 carries out a position estimating process from the stored GPS information in such a state that the pieces of GPS information at the time when the position is clearly deviated from are omitted. In other words, the sign information integrating unit 310 excludes the pieces of information on the position of the sign that has been calculated by the sign position estimating unit 309 at the time when the GPS information indicates a position that is clearly deviated from the route along which the vehicle is running. Here, the deviations of the position include cases where the position is opposite to the track on the basis of the time axis and the direction, and the moving direction is different by 180 degrees, for example.

Next, in the map plotting unit 311, the sign information generated in the sign information integrating unit 310 is plotted on a map (step S122). FIG. 7 shows an example of a map on which sign information is plotted. In this figure, the position in which a sign is installed that has been specified as one point is plotted with the symbol "▼" (black inverted triangle) on the map. In addition, the other estimated positions that have been gained for this sign are plotted with the symbol "V" (white inverted triangle) on the map for reference.

As described above, a sign database can be prepared on the basis of maps.

Methods for calculating the distance between the vehicle and a sign and estimating the position in which the sign is installed are described in reference to FIGS. 8 and 9. As shown in FIG. 6, there are signs having different dimensions (those with magnification of 2/3, 1.0, 1.5 and 2.0, for example) showing the same contents, and therefore, it is necessary to specify the dimensions when a sign is detected. Here, an example of a case where a sign with standard dimensions has been detected is described, and the method for specifying the dimensions of the sign is described below. In addition, it is assumed that the direction of the optical axis of the image pick-up device 100 is made the same as the direction in which the vehicle is progressing (that is to say, the difference between the direction of the optical axis of the image pick-up device 100 and the direction in which the vehicle is moving is 0 degrees).

In FIG. 9, $P_1$ is the position of the vehicle, $P_2$ is the position of the sign, Li is a line that extends in the direction in which the vehicle is progressing (the optical axis of the image pick-up device 100), $L_2$ is a line that crosses the line Li at right angles and passes through the position $P_2$ of the sign, and $P_3$ is the point of intersection between the lines Li and $L_2$. In FIG. 8, the upper left point of the image is the origin O (0, 0), the axis in the lateral direction is the axis X and the axis in the longitudinal direction is the axis Y.

The length of the photography range $D_H$ [m] in the lateral direction in the position in which the sign is installed (that is to say, the length of the line $L_2$ that can be photographed) can be calculated in the following (Formula 1):

$$D_H = H \times W/w \text{ ... (Formula 1)},$$

where H [pix] is the horizontal resolution of the image, w [pix] is the lateral width of the sign within the image, and W [m] is the lateral width of the actual sign.

The distance $D_1$ between the position $P_1$ of the vehicle and the point of intersection $P_3$ (that is to say, the distance between the vehicle and the sign in the direction of the optical axis of the image pick-up device 100) can be calculated in the following (Formula 2):

$$D_1 = (D_H/2)/\tan(\theta/2) \text{ ... (Formula 2)},$$

where θ [°] is the horizontal angle of coverage of the image pick-up device.

In addition, the distance d between the center line C of the image in the longitudinal direction (which is the same as the line Li) and the center of the sign can be calculated in the following (Formula 3):

$$d = H/2 - x \text{ ... (Formula 3)},$$

where (x, y) are the coordinates of the center of the sign within the image, that is to say, x is the coordinate of the center of the sign in the lateral direction.

In addition, the distance $D_2$ between the point of intersection $P_3$ and the position of the sign $P_2$ (that is to say, the distance between the vehicle and the sign in the direction that crosses the direction of the optical axis of the image pick-up device 100 at right angles) can be calculated in the following (Formula 4):

$$D_2 = D_H \times d/H \text{ ... (Formula 4)}.$$

Accordingly, the distance $D_3$ between the vehicle and the sign in the direction of the line can be calculated in the following (Formula 5):

$$D_3 = \sqrt{\left({D_A}^2 + {D_B}^2\right)} \text{ ... (Formula 5)}.$$

In the case of the horizontal angle of coverage of the image pick-up device θ = 100 [°] (degree), the horizontal resolution of the image H = 1920 [pix], the coordinate in the lateral direction of the center of the sign within the image x = 724 [pix], the lateral width of the sign within the image w = 32 [pix], and the lateral width of the actual sign W = 0.6 [m], for example, $D_1 \fallingdotseq 16.4$ [m], $D_2 \fallingdotseq 4.5$ [m], and $D_3 \fallingdotseq 17.0$ [m]. Accordingly, the position of the sign $P_2$ can be assumed to be at the point that is 16.4 meters away from the position of the vehicle $P_1$ in the direction in which the vehicle is progressing, and 4.5 meters away from the position of the vehicle $P_1$ in the left direction.

As described above, the distance $D_1$ between the position of the vehicle $P_1$ and the point of intersection $P_3$ , the distance $D_2$ between the point of intersection $P_3$ and the position of the sign $P_2$, and the distance $D_3$ between the position of the vehicle $P_1$ and the position of the sign $P_2$ in the direction of the line can be calculated on the basis of the horizontal angle of coverage of the image pick-up device θ, the horizontal resolution of the image H, the coordinate of the center of the sign in the lateral direction within the image x, the lateral width of the sign within the image w, and the lateral width of the actual sign W. In addition, the position of the vehicle $P_1$ can be shifted by the distance $D_1$ in the direction of the optical axis of the image pick-up device 100 that is the same as the direction in which the vehicle is progressing (direction of the line Li), and furthermore can be shifted by the distance $D_2$ in the direction that crosses the direction of the optical axis at right angles (direction of the line $L_2$) in order to gain the position of the sign $P_2$. Alternatively, the position of the vehicle $P_1$ can be shifted by the distance $D_3$ in the direction that is inclined from the direction of the optical axis by α degrees in order to gain the position of the sign $P_2$.

In the above-described configuration, the direction in which the vehicle is progressing and the direction of the optical axis of the image pick-up device 100 are the same; however, as illustrated in FIG. 10, such a configuration is also possible that the direction in which the vehicle is progressing and the direction of the optical axis of the image pick-up device 100 are different. In this case, for example, the difference (= β degrees) between the direction in which the vehicle is moving $A_1$ and the direction of the optical axis $A_2$ of the image pick-up device 100 may be measured in advance and stored in order to correct the position of the sign $P_2$ that has been calculated in the above-described manner through the coordinate rotation where the coordinates are rotated by β degrees around the position of the vehicle $P_1$.

In addition, the lateral width of the sign is used to calculate the distance in the above description; however, other elements that indicate the size of the sign (longitudinal width, for example) may be used to calculate the distance. In the case where the longitudinal width of the sign is used, for example, the lateral widths w and W in the above (Formula 1) may be replaced with the longitudinal width of the sign within the image and the longitudinal width of the actual sign for calculation.

In some situations of the installation of the sign, the lateral width and the longitudinal width of the sign shown in an image significantly differ, and in such a case, the longer one of the lateral width and the longitudinal width of the sign can be used for calculation in order to calculate the distance more precisely. Here, the lateral width and the longitudinal width of the sign can be basically compared in a simple manner, and as for signs in a pentagonal shape (signs that indicate pedestrian crossings, for example), the lateral width and the longitudinal width in the triangular portion on the upper side can be compared.

Next, several methods for identifying the dimensions of a sign are described.

(1) Identification due to the type of road

In many cases, the dimensions of a sign are determined in accordance with the type of road (the speed limit designated for the road and the number of lanes). Accordingly, it is possible to specify the dimensions of a sign to a certain extent in the case where the type of road is found. Thus, the sign distance calculating unit 307 may use a map database with road data including the road types in order to specify the dimensions of a sign. In this case, the sign distance calculating unit 307 stores a correspondence table between the road types and the dimensions of the signs in advance. Alternatively, the sign distance calculating unit 307 may specify the number of lanes of a road through image analysis, and thus may specify the dimensions of the sign in accordance with the number of lanes. In this case, the sign distance calculating unit 307 stores a correspondence table between the number of lanes and the dimensions of the signs in advance.

(2) Identification due to the positional relationship between the road and the sign

In the case of a road having a small number of lanes, signs with standard dimensions are installed on the left side of the load. In the case of a road having a large number of lanes, however, in many cases, signs with enlarged dimensions (mainly 1.5 times greater) are installed along the road. Accordingly, it is possible to identify the dimensions of the signs to a certain extent in the case where the positional relationships between the road and the signs are found. Therefore, the sign distance calculating unit 307 may determine that a sign has standard dimensions in the case where the position of the sign is on the left side of the image, whereas the sign calculating unit 307 may determine that a sign has expanded dimensions in the case where the position of the sign is at the center of the image. In the case where the sign is far away from the vehicle, however, the sign is located in the center of the image, and therefore, it is necessary to determine the positional relationship between the sign and the road by using an image where the sign is shown as magnified to a certain extent (preferably, the image showing the sign at the greatest enlargement). Alternatively, the track of the sign in the image data may be analyzed so as to determine that the sign has standard dimensions in the case where the sign draws a track along which the sign moves in the left direction of the images, while determining that the sign has enlarged dimensions in the case where the sign draws a track along which the sign moves in the upward direction of the images.

(3) Identification due to the amount of change in the size of the sign within the images accompanying the running of the vehicle

As the vehicle runs, the size of the sign within an image gradually increases, and the amount of change thereof (the increment amount) differs depending on the dimensions of the sign. That is to say, the distance between the vehicle and the sign at the point in time when the sign has first been detected is greater when the sign has enlarged dimensions than when the sign has standard dimensions (that is to say, the sign having enlarged dimensions is detected further away). After that, however, the amount of change in the size of the sign within the image is greater when the sign has standard dimensions than when the sign has enlarged dimensions. Therefore, the amount of change in the size of the sign within the image as the vehicle runs is measured for each set of dimensions of the sign so as to be stored as data before the system is operated, and thus, the sign distance calculating unit 307 may calculate the amount of change in the size of the sign within the image on the basis of a plurality of images that are gained while the vehicle is running when the system is operated, and then, may compare the results with the stored data in order to identify the dimensions of the sign.

Here, the above-described method for identifying the dimensions of a sign is merely an example, and the dimensions of a sign may be identified through other methods. In addition, signs having standard dimensions (1.0x magnification) actually occupy the majority of the signs, and therefore, it is possible to identify the position in which the signs are installed with precision to a certain extent even in the case where the process is carried out by regarding that the signs uniquely have standard dimensions.

As described above, the sign registration system in the present example is provided with an image pick-up device 100 that is equipped in a vehicle, a GPS receiver 200 for measuring the position of the vehicle, and an image processing device 300 for processing an image that has been taken by the image pick-up device 100. Thus, the image processing device 300 in the present example is formed in such a manner that a sign detection unit 303 detects a sign from an image, a sign distance calculating unit 307 calculates, in the case where a sign is detected from an image by means of the sign detection unit 303, the distance $D_1$ between the vehicle and the sign in the direction of the optical axis of the image pick-up device 100 and the distance $D_2$ between the vehicle and the sign in the direction that crosses at right angles with the direction of the optical axis of the image pick-up device 100 on the basis of the angle of coverage of the image pick-up device 100, the resolution of the image, the position and the size of the sign within the image, and the actual size of the sign, and a sign position estimating unit 309 estimates the position in which the sign is installed on the basis of the amount of difference between the direction in which the vehicle progresses and the direction of the optical axis of the image pick-up device 100, the direction in which the vehicle progresses and the position of the vehicle at the time when the image is taken, and the distances $D_1$ and $D_2$ that have been calculated by the sign distance calculating unit 307.

Such a configuration makes it possible to estimate the position in which the sign shown in an image is actually installed on the basis of the image that has been taken while the vehicle is running. Accordingly, it becomes possible to automatically identify the positions in which signs are installed in order to collect sign information simply by allowing the vehicle to run around the area that is the target for collecting sign information and processing the images that have been taken during that time.

In addition, the image processing device 300 in the present example is formed in such a manner that a sign information integrating unit 310 integrates to one point the positions in which a sign is installed and that have been estimated by the sign position estimating unit for each of a plurality of images that show the same sign. Accordingly, it is possible to identify the position in which a sign is installed with higher precision.

Here, the image processing unit 300 in the present example is formed of a computer having hardware resources that include a processor such as a CPU (central processing unit) and a memory, and thus, a program that has been stored in the memory in advance is run by the processor so that the respective functions can be implemented in the configuration. That is to say, the program that relates to the respective functions of the sign detection unit, the distance calculating unit, the sign position estimating unit and the sign position integrating unit according to the present invention is run in order to implement the sign detection unit 303, the sign distance calculating unit 307, the sign position estimating unit 309 and the sign information integrating unit 310.

In the above description, a front camera for taking images in front of the vehicle is used to take images of signs that are installed for a lane running in the same direction as the vehicle; however, a rear camera for taking images towards the back of the vehicle may be used to take images of signs that are installed for a lane running in the opposite direction in order to specify the positions of the signs that are recognized.

In the above description, signs (road signs) that are installed along a road are photographed while a vehicle is running; however, signs (railroad signs) that are installed along a railway may be photographed while a train is running in order to identify the positions of signs that are recognized.

The present invention is described above with an example of a case where the present invention is applied to a sign registration system; however, the present invention is not limited to such examples, and it is needless to say that the invention can be applied widely in addition to the above.

It is also possible for the present invention to provide a method or a system for carrying out the process according to the present invention, a program for implementing such a system with a computer having hardware resources such as a processor and a memory, a storage medium for storing such a program and the like.

INDUSTRIAL APPLICABILITY

The present invention can be applied to a sign position identification system for identifying the position of a sign on the basis of an image that has been taken by an image pick-up device.

REFERENCE SIGNS LIST

100: image pick-up device
200: GPS receiver
300: Image processing device
400: recording device
500: operation terminal
101: image pick-up unit
102: image quality adjusting unit
103: position within image frame information integrating unit
104: image output unit
201: GPS receiving unit

202: GPS information generating unit
301: image receiving unit
302: image disassembling unit
303: sign detection unit
304: sign identifying unit
305: auxiliary sign detection unit
306: auxiliary sign identifying unit
307: sign distance calculating unit
308: GPS information sampling unit
309: sign position estimating unit
310; sign information integrating unit
311: map plotting unit

**Claims**

1. A sign position identification system, comprising: an image pick-up device equipped in a moving body; a positioning device that measures the position of the moving body; and an image processing device that processes an image that has been taken by the image pick-up device, wherein
the image processing device comprises:

    a sign detection unit that detects a sign from the image;
    a distance calculating unit that calculates, in the case where a sign is detected from the image by the sign detection unit, a first distance between the moving body and the sign in the direction of the optical axis of the image pick-up device and a second distance between the moving body and the sign in the direction that crosses at right angles with the direction of the optical axis of the image pick-up device on the basis of the angle of coverage of the image pick-up device, the resolution of the image, the position and the size of the sign within the image, and the actual size of the sign; and
    a sign position estimating unit that estimates the position in which the sign is installed on the basis of the direction in which the moving body moves and the position of the moving body at the time when the image is taken, and the first and second distances that have been calculated by the distance calculation unit.

2. The sign position identification system according to claim 1, wherein
the sign position estimating unit estimates the position in which the sign is installed on the basis of the amount of shift of the direction of the optical axis of the image pick-up device relative to the direction in which the moving body moves.

3. The sign position identification system according to claim 1, wherein
the lateral width or the longitudinal width of the sign is used as the size of the sign within the image and the actual size of the sign.

4. The sign position identification system according to claim 3, wherein

    in the case where the lateral width of the sign within the image is longer than the longitudinal width, the lateral width of the sign is used as the size of the sign within the image and the actual size of the sign, and
    in the case where the longitudinal width of the sign within the image is longer than the lateral width, the longitudinal width of the sign is used as the size of the sign within the image and the actual size of the sign.

5. The sign position identification system according to claim 1, wherein

    the sign is one from among the ones with a plurality of dimensions, and
    the dimensions of the sign are specified in accordance with the type of road.

6. The sign position identification system according to claim 1, wherein

    the sign is one from among the ones with a plurality of dimensions, and
    the dimensions of the sign are specified in accordance with the positional relationship between the road and the sign.

7. The sign position identification system according to claim 1, wherein

    the sign is one from among the ones with a plurality of dimensions, and
    the dimensions of the sign are specified in accordance with the amount of change in the size of the sign within the image as the vehicle runs.

8. The sign position identification system according to claim 1, wherein
the image processing device further comprises a sign position integrating unit that integrates the positions in which the sign is installed that have been estimated by the sign position estimating unit for each of a plurality of images that show the same sign, into one position.

9. A program for allowing a computer which can process an image that has been taken by an image pick-up device equipped in a moving body to implement

    a sign detection function that detects a sign from the image,

a distance calculation function that calculates, in the case where a sign is detected from the image through the sign detection function, a first distance between the moving body and the sign in the direction of the optical axis of the image pick-up device and a second distance between the moving body and the sign in the direction that crosses at right angles with the direction of the optical axis of the image pick-up device on the basis of the angle of the coverage of the image pick-up device, the resolution of the image, the position and the size of the sign within the image and the actual size of the sign, and
a sign position estimating function that estimates the position in which the sign is installed on the basis of the direction in which the moving body moves and the position of the moving body at the time when the image is taken, and the first and second distances that have been calculated by the distance calculating function.

FIG.1

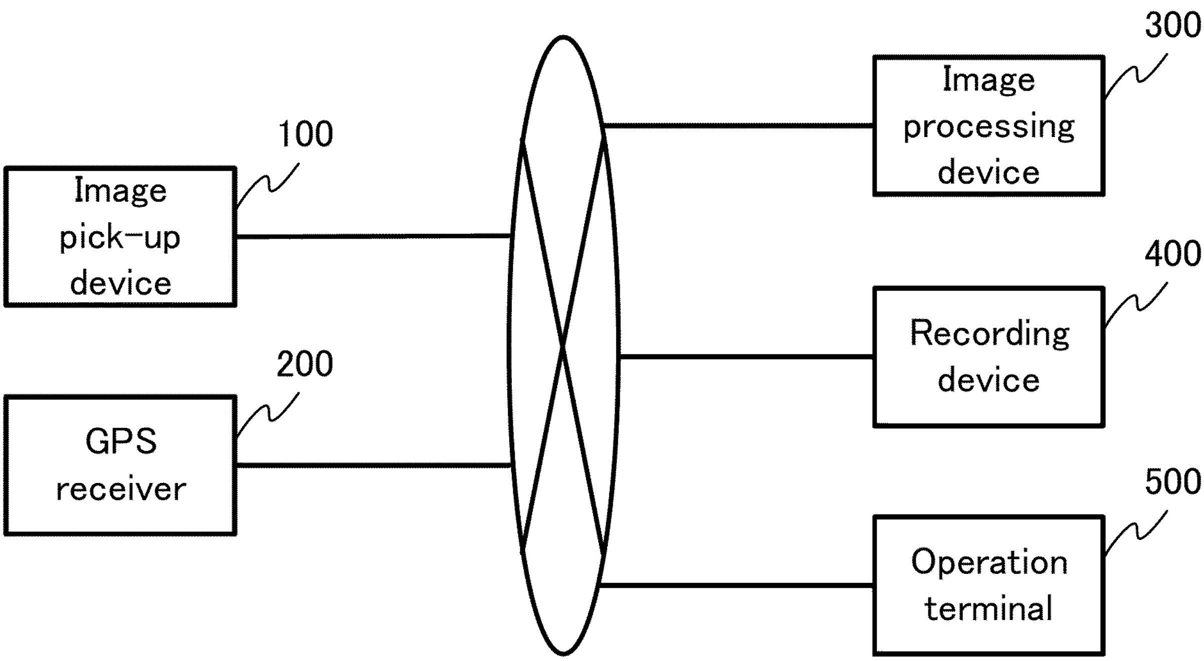
100
Image
pick-up
device
200
GPS
receiver
300
Image
processing
device
400
Recording
device
500
Operation
terminal

FIG.2

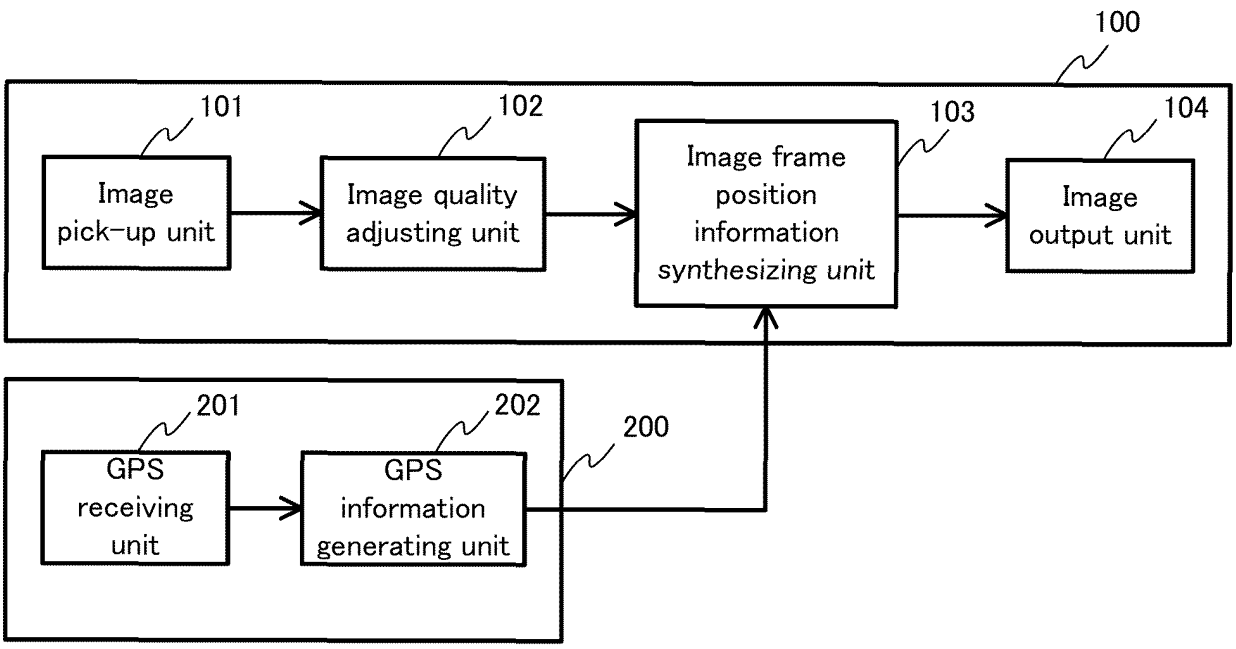
100
101
Image
pick-up unit
102
Image quality
adjusting unit
103
Image frame
position
information
synthesizing unit
104
Image
output unit
201
GPS
receiving
unit
202
GPS
information
generating unit
200

FIG.3

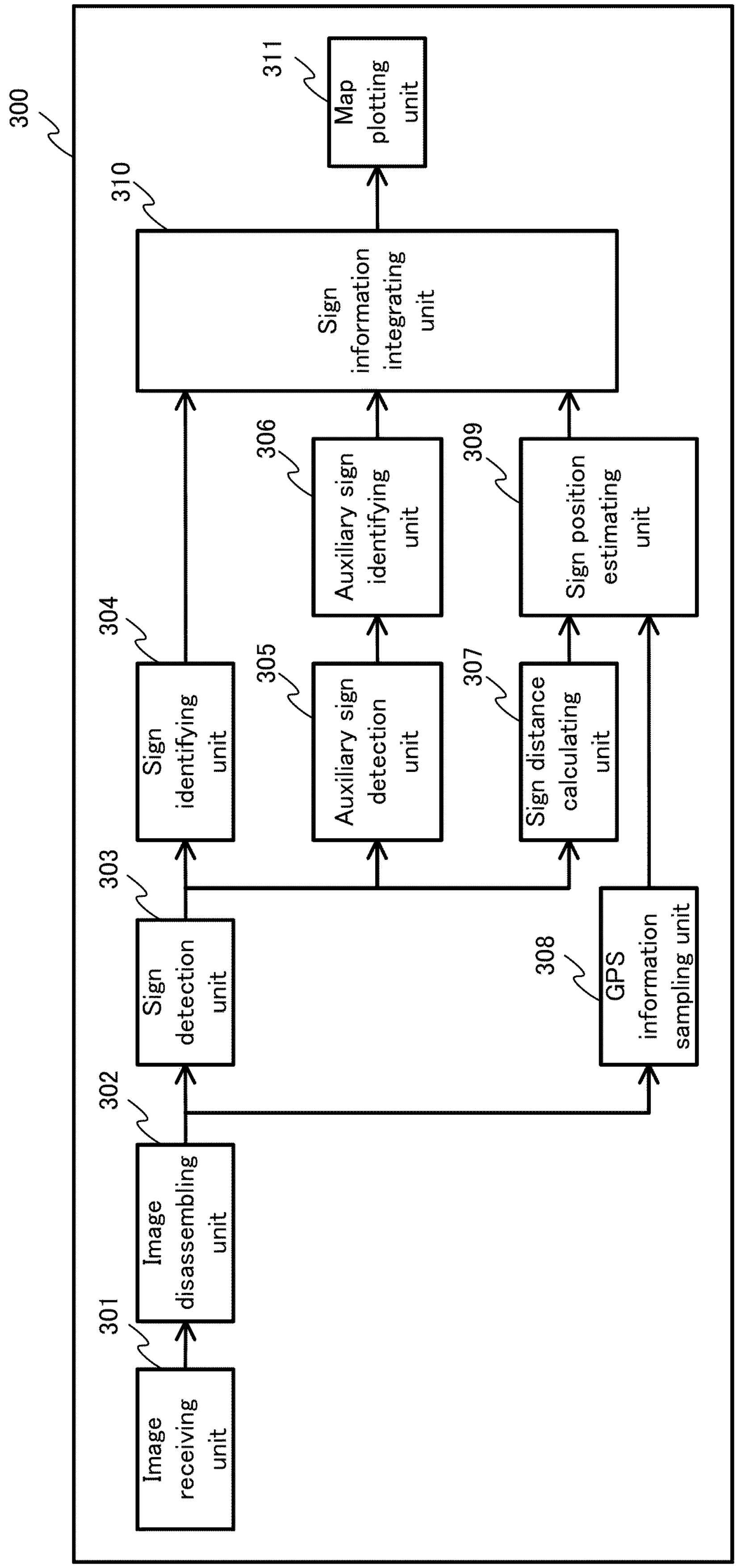
300
Image receiving unit
301
Image disassembling unit
302
Sign detection unit
303
Sign identifying unit
304
Auxiliary sign detection unit
305
Auxiliary sign identifying unit
306
Sign distance calculating unit
307
GPS information sampling unit
308
Sign position estimating unit
309
Sign information integrating unit
310
Map plotting unit
311

FIG.4

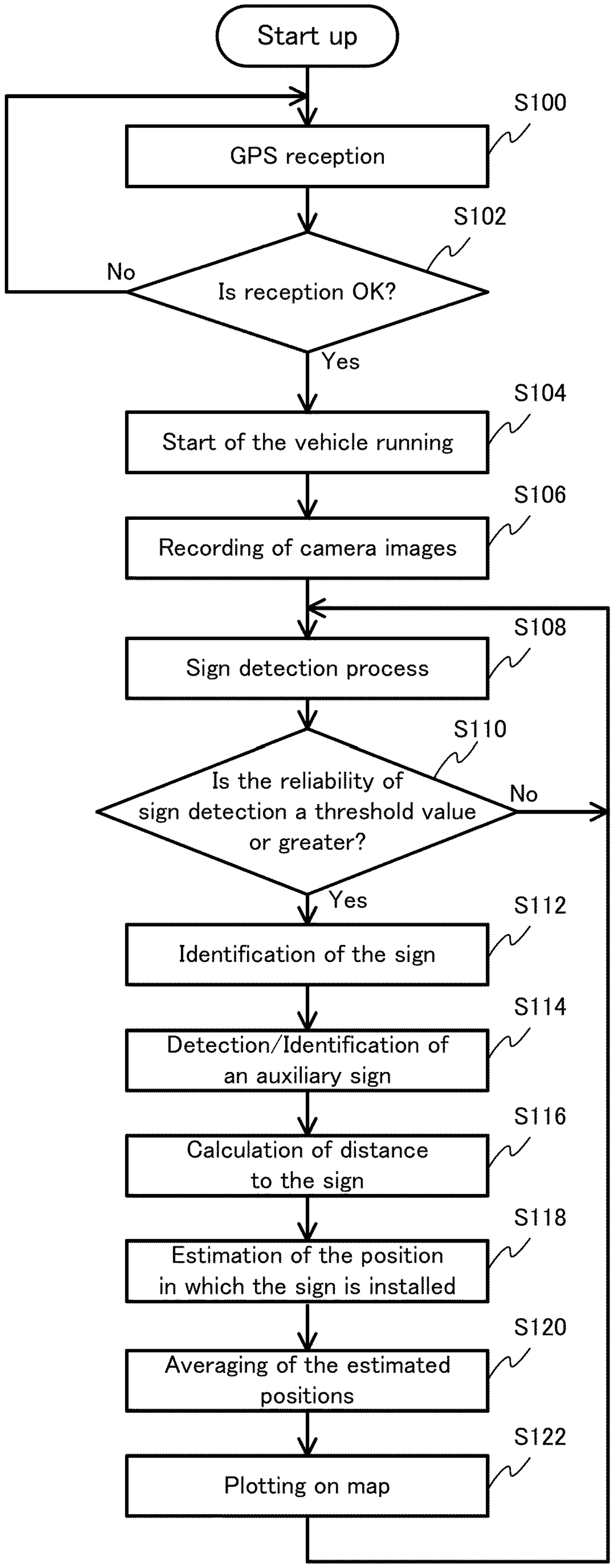
Start up
S100
GPS reception
S102
No
Is reception OK?
Yes
S104
Start of the vehicle running
S106
Recording of camera images
S108
Sign detection process
S110
Is the reliability of sign detection a threshold value or greater?
No
Yes
S112
Identification of the sign
S114
Detection/Identification of an auxiliary sign
S116
Calculation of distance to the sign
S118
Estimation of the position in which the sign is installed
S120
Averaging of the estimated positions
S122
Plotting on map

FIG.5

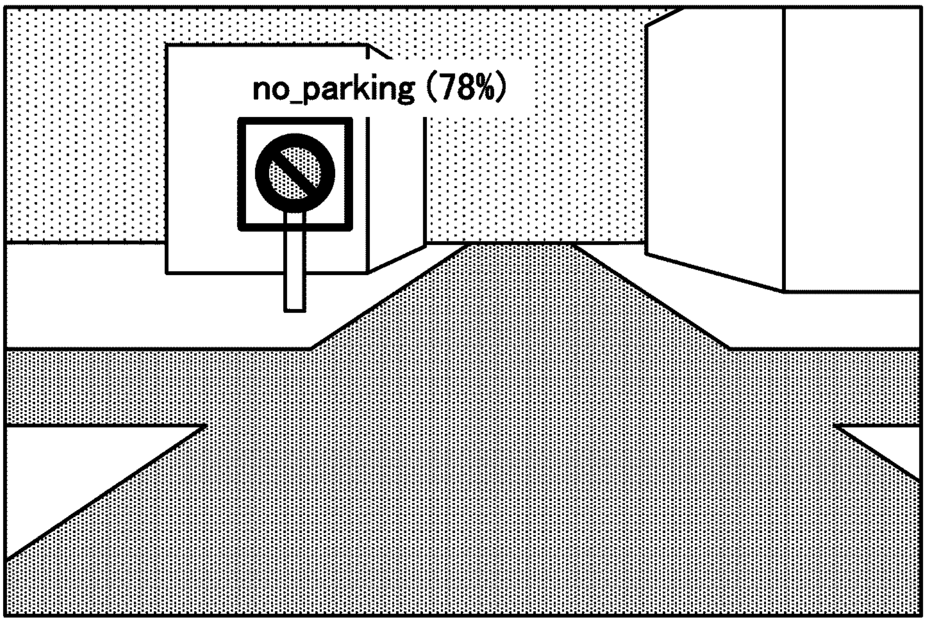

# FIG.6

| | Regulation signs | | | Indication signs | | 「Stop」 「Yield」 |
|---|---|---|---|---|---|---|
| | Those indicating absolute prohibition | | Those for affirmative order or designation | | | |
| | Those for vehicles | Those for pedestrians | | | | |
| Shapes | (Circular) | (Squared) | (Circular) | (Squared) | (Pentagonal) | (Triangular) |
| | Typical signs | | | | | |
| Colors | Red frame, white background, blue symbol | Red frame, white background, blue symbol | Blue background, white symbol | Blue background, white symbol | | "Stop" Red letters, white symbol<br>"Yield" Red frame, white background, blue symbol |

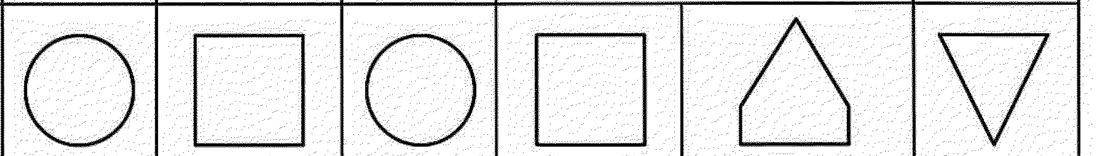

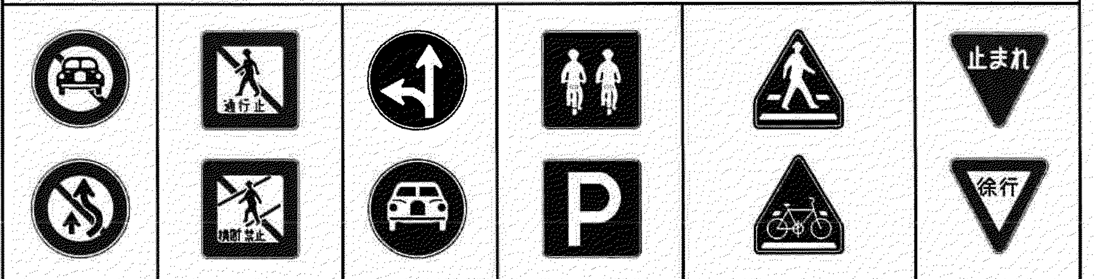


| Dimensions | Magnification | Dimensions | Magnification | Dimensions | Magnification | Dimensions | Magnification | Dimensions | Magnification | Dimensions | Magnification | Dimensions |
|---|---|---|---|---|---|---|---|---|---|---|---|---|
| | 2/3 | 400φ | 2/3 | 600x600 | 2/3 | 400φ | 2/3 | 600x600 | 2/3 | 400x133x400 | 2/3 | 533 |
| | 1.0 | 600φ | 1.0 | 900x900 | 1.0 | 600φ | 1.0 | 900x900 | 1.0 | 600x200x600 | 1.0 | 800 |
| | 1.5 | 900φ | 1.5 | 1350x1350 | 1.5 | 900φ | 1.5 | 1350x1350 | 1.5 | 900x300x900 | 1.5 | 1200 |
| | 2.0 | 1200 φ | 2.0 | 1800x1800 | 2.0 | 1200 φ | 2.0 | 1800x1800 | 2.0 | 1200x400x1200 | 2.0 | 1600 |
| | Diameter | | Longitude × width | | Diameter | | Longitude × width | | Longitude × longitude × width | | Side | |

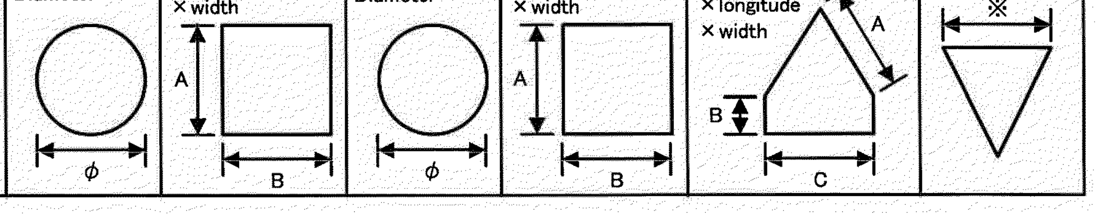

FIG.7

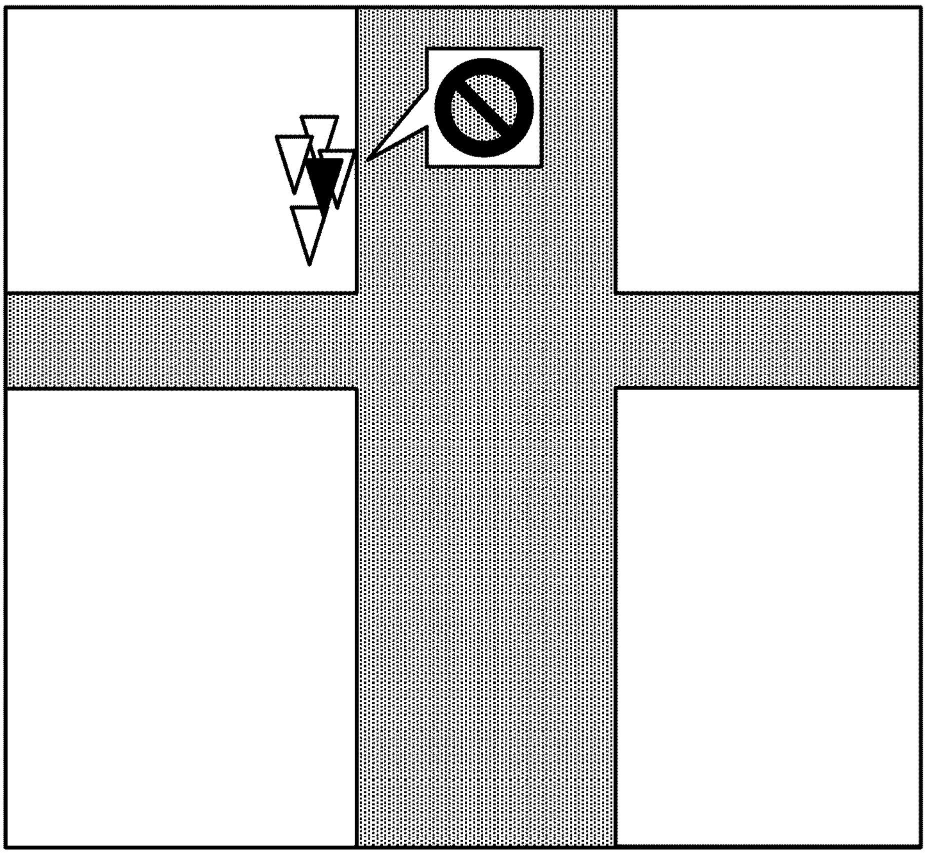

FIG.8

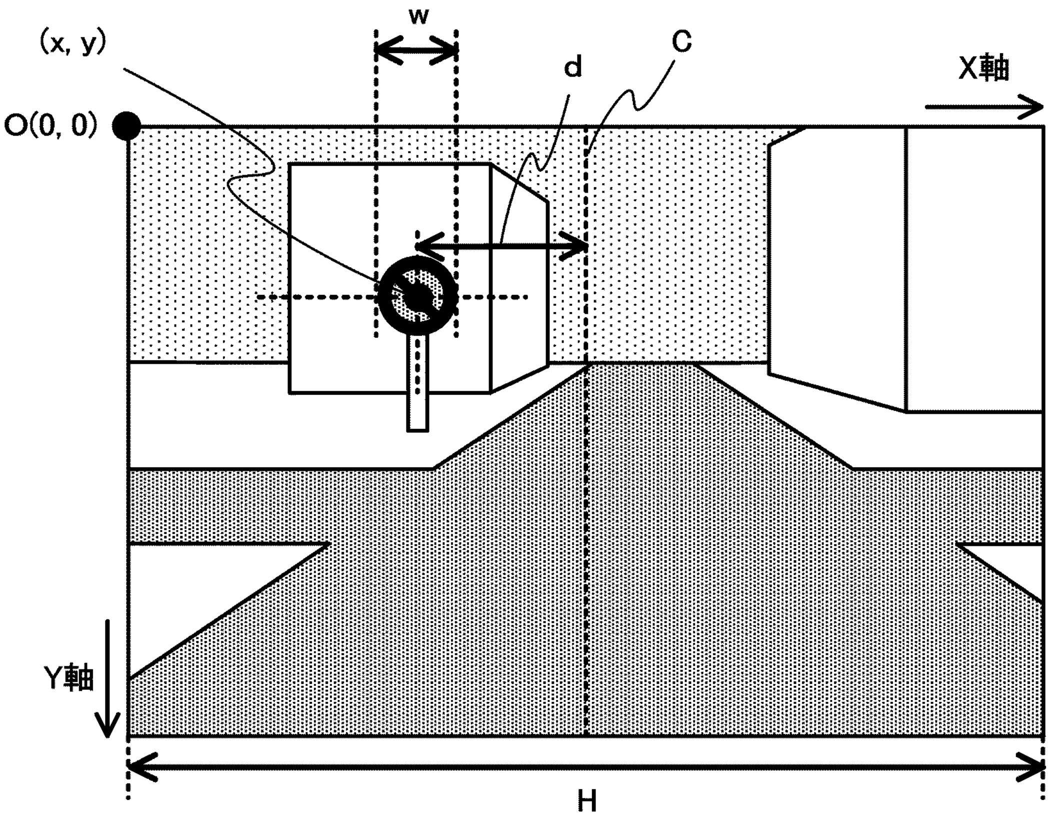

FIG.9

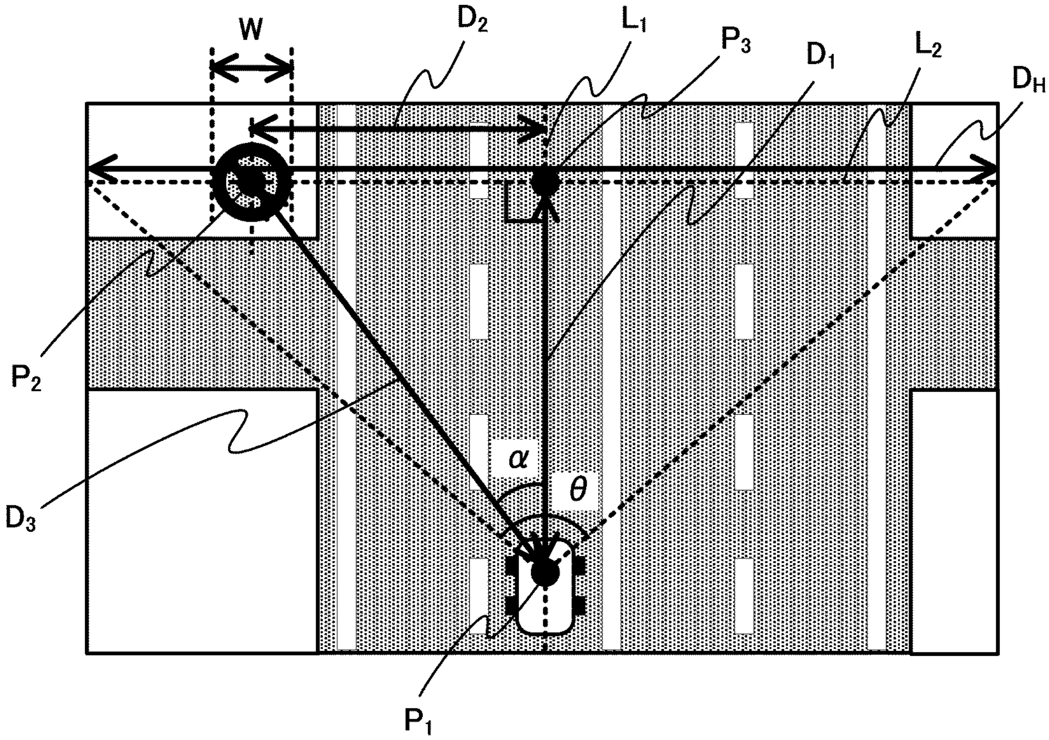


FIG.10

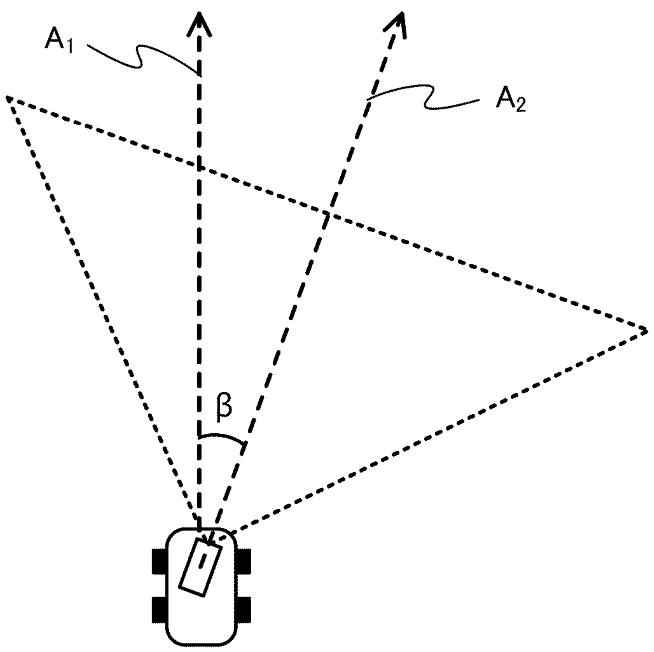

**INTERNATIONAL SEARCH REPORT**

International application No.
PCT/JP2019/013133

A. CLASSIFICATION OF SUBJECT MATTER
Int. Cl. G08G1/16(2006.01)i, G06T1/00(2006.01)i, G08G1/09(2006.01)i

According to International Patent Classification (IPC) or to both national classification and IPC

B. FIELDS SEARCHED
Minimum documentation searched (classification system followed by classification symbols)
Int. Cl. G08G1/16, G06T1/00, G08G1/09

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 7-220194 A (FUJITSU LTD.) 18 August 1995, paragraphs [0018]-[0043] (Family: none) | 1-9 |
| A | JP 2008-287379 A (HITACHI, LTD.) 27 November 2008, paragraphs [0013]-[0039] (Family: none) | 1-9 |
| A | JP 2018-36225 A (SOKEN INC.) 08 March 2018, paragraphs [0011]-[0048] (Family: none) | 1-9 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31.05.2019 | 11.06.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008287379 A
- JP 2018097738 A